# EUROPÄISCHE PATENTSCHRIFT

(11) **EP 2 528 178 B1**
(45) Veröffentlichungstag und Bekanntmachung des Hinweises auf die Patenterteilung: **24.08.2016**
(21) Anmeldenummer: 12168504.4
(22) Anmeldetag: 18.05.2012
(51) Int. Cl.: H02B 1/052

(54) **Schaltvorrichtung**
Switching device
Dispositif de commutation

(30) Priorität: 26.05.2011 DE 102011076550
(43) Veröffentlichungstag der Anmeldung: 28.11.2012
(73) Patentinhaber: Wöhner GmbH & Co. KG Elektrotechnische Systeme, 96472 Rödental (DE)
(72) Erfinder: Büttner, Alex, 96472 Rödental (DE)
(74) Vertreter: Isarpatent

(56) Entgegenhaltungen:
- DE-A1-102004 062 524
- DE-A1-102006 030 953
- DE-U1-202004 019 381

## Beschreibung

Die Erfindung betrifft eine Schaltvorrichtung zur Befestigung auf Tragschienen in Schaltanlagen oder dergleichen.

In Schaltanlagen dienen Tragschienen zur Befestigung von Schaltvorrichtungen, beispielsweise Schaltgeräten oder Sicherungschaltern. Die Tragschienen sind dabei üblicherweise fest in der Schaltanlage montiert oder werden gemäß der DE 20 2004 011 736 U1 auf Adaptern befestigt, die ihrerseits auf Sammelschienen aufsteckbar sind. Die Tragschienen können verschiedenartig konfiguriert sein, weisen aber vorzugsweise zwei zueinander beabstandete und voneinander Weg weisende Führungsschenkel auf, auf welche die betreffenden Schaltvorrichtungen mit an ihrer Unterseite ausgebildeten Ausnehmungen aufgesetzt und arretiert werden.

Eine bekannte Schaltvorrichtung, z. B. vom Typ Wöhner AES1P/N, Artikel-Nr. 31273, ist an ihrer Unterseite mit einer Ausnehmung versehen, die auf einer Seite hakenförmig gestaltet ist zum Aufsetzen auf einen Schenkel einer Tragschiene, und die auf der anderen Seite mit einem verstellbaren Schieber ausgerüstet ist, welcher nach dem Aufsetzen der Schaltvorrichtung mit Federdruck automatisch den anderen Schenkel der Tragschiene untergreift und auf diese Weise sicherstellt, dass die Schaltvorrichtung fest auf der jeweiligen Tragschiene gesichert ist. Der Schieber ist hierbei in Richtung der Längsachse der Schaltvorrichtung, d.h. quer zur Achse der Tragschiene verstellbar und durch an der Unterseite der Schaltvorrichtung ausgebildete, umgebogene Schenkel verstellbar geführt. Zum Dearretieren der Schaltvorrichtung ist der Schieber mittels eines Werkzeuges von der Tragschiene weg zu verlagern, wonach dann die Schaltvorrichtung von der Tragschiene abgehoben werden kann.

Nachteilig bei derartigen Schaltvorrichtungen ist, dass während der Herstellung durch eine zusätzliche Formmaschine Einzelteile herzustellen sind zur Bildung des erwähnten Schiebers, und dass der Schieber nach dem Spritzvorgang des Gehäuses der Schaltvorrichtung in die dort entsprechend vorgesehene Führungsaufnahme eingesetzt werden muss. Diese Führungsaufnahme mit Schieber hat hierbei die Funktion einer Arretiereinrichtung zum Arretieren der Schaltvorrichtung gegenüber der Tragschiene.

Derartige Schaltvorrichtungen können einpoliger oder mehrpoliger Ausgestaltung sein oder aus einpoligen Einheiten zu mehrpoligen Einheiten zusammengesetzt sein, wobei jede einzelne Schaltvorrichtung mit einem derartigen Schieber ausgerüstet ist.

In der DE 10 2004 062 524 A1 ist eine Schnellbefestigung an einem elektrischen Installationsgerät, insbesondere an einem Leitungsschutzschalter, Fehlerstromschutzschalter und dergleichen, zum Aufschnappen desselben auf eine Norm - insbesondere Hutprofiltragschiene, offenbart. Das elektrische Installationsgerät weist an der Befestigungsseite eine Ausnehmung mit einer feststehenden an einer Wandung der Ausnehmung befindlichen feststehende Nase und einer federnd dauernd nach innen in Richtung eine Wandung gedrückte bewegliche Nase auf, welche Nasen im montierten Zustand hinter die Längskanten der freien Schenkel der Hutprofiltragschiene greifen. Die federnde Nase ist an einem Schieber angeformt, der mit dem Installationsgerät mittels wenigstens eines federnden Verbindungssteges einstückig verbunden ist.

Des Weiteren ist in der DE 10 2006 030953 A1 eine elektrische Einrichtung offenbart, insbesondere Leitungs-, Fehlerstrom- oder Motorschutzschalter oder dergleichen, mit einer Schnellbefestigungsvorrichtung zum Aufschnappen der Einrichtung auf eine Hutprofilschiene in einer Installationsverteilung. Die elektrische Einrichtung weist eine Befestigungsfläche auf. Hier sind zwei bewegbare Nasen vorgesehen, die über eine V-Form, deren offene Seite zur Befestigungsfläche hinweist, mit einem Schieber verbunden sind. Die Schieber verlaufen mit ihrer Längserstreckung parallel zu einer Boden- oder Befestigungswand und an ihren inneren Enden, schließen die V-Formen an.

Aufgabe vorliegender Erfindung ist es, eine Schaltvorrichtung zu schaffen, die eine Arretiereinrichtung aufweist, wobei die Gesamtkonstruktion der Schalteinrichtung vereinfacht ist und zur Reduzierung der Herstellungskosten maßgeblich beiträgt.

Diese Aufgabe wird erfindungsgemäß bei einer Schaltvorrichtung gemäss dem Anspruch 1 gelöst.

Weitere Ausgestaltungen der erfindungsgemäßen Schaltvorrichtung ergeben sich aus den Unteransprüchen.

Nachfolgend wird eine bevorzugte Ausführungsform der erfindungsgemäßen Schaltvorrichtung zur Erläuterung weiterer Merkmale beschrieben. Es zeigen:
- Fig. 1: eine Perspektivansicht einer einpoligen Schaltvorrichtung, vorzugsweise in Form eines Sicherungsschalters,
- Fig. 2: eine Fig. 1 entsprechende Darstellung einer dreipoligen Schaltvorrichtung,
- Fig. 3: eine Ansicht einer Gehäuseschalenhälfte der Schaltvorrichtung entsprechend der Ansicht III-III' in Fig. 1,
- Fig. 4: eine Perspektivansicht der Schaltvorrichtung zur Erläuterung der Ausnehmung und der zugehörigen Tragschiene an deren Unterseite,
- Fig. 5: eine Ansicht der anderen Gehäusehälfte der Schaltvorrichtung,
- Fig. 6: eine Unteransicht der erfindungsgemäßen Schaltvorrichtung, und
- Fig. 7: eine Darstellung einer bevorzugten Schaltvorrichtung in Form eines Sicherungsschalters, und
- Fig. 8: eine Teilschnittdarstellung der Schaltvorrichtung zur Darstellung der Befestigung der Schaltvorrichtung auf einer Tragschiene

Im Folgenden wird eine bevorzugte Ausführungsform der Schaltvorrichtung, vorzugsweise in Form eines Sicherungsschalters, näher erläutert. Die erfindungsgemäße Schaltvorrichtung weist ein Gehäuse 1 auf, das bei der dargestellten Ausführungsform aus zwei Schalenhälften 1a, 1b besteht, die zusammen einen Raum festlegen, in welchem eine Schalteinrichtung angeordnet ist. An der Oberseite des Gehäuses 1 befindet sich ein Betätigungsschalter 2, der auf die Schalteinrichtung wirkt oder durch die Schalteinrichtung beaufschlagt wird.

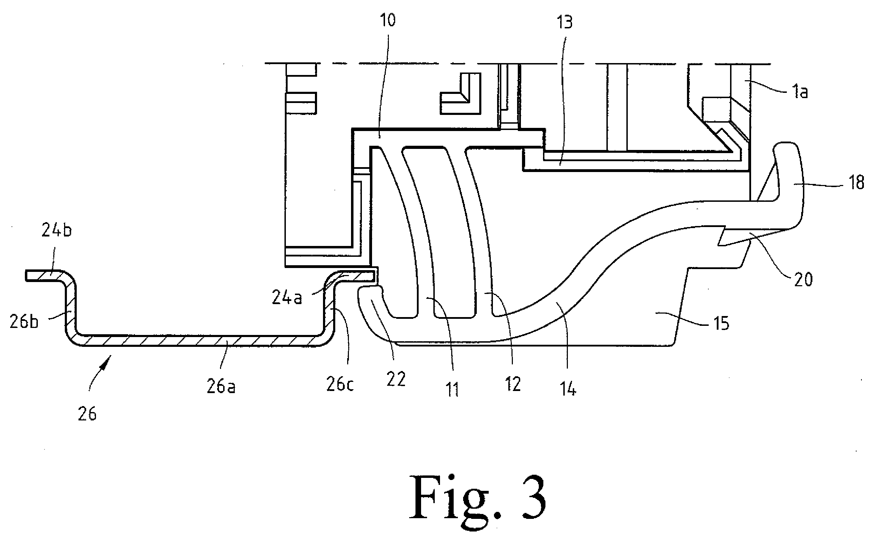

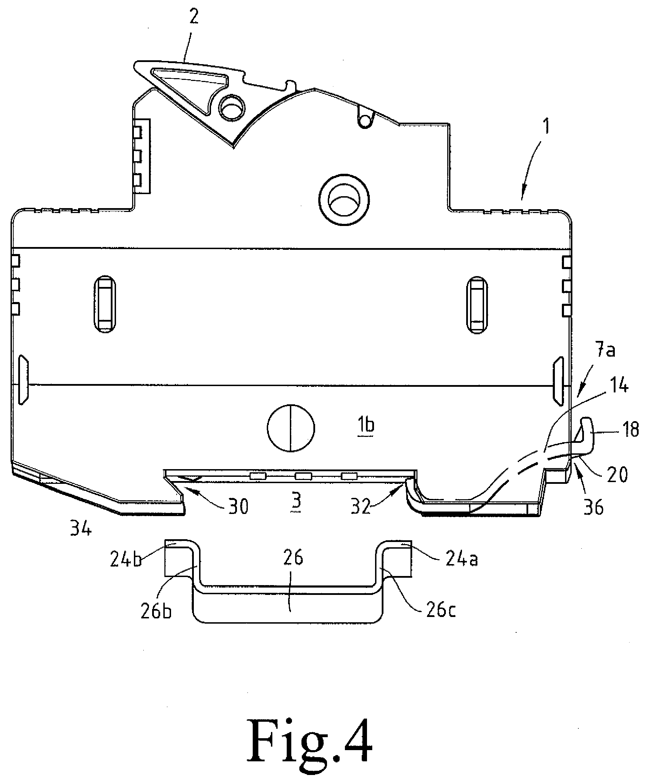

Das Gehäuse 1 weist an seiner Unterseite eine Ausnehmung 3 auf, die übliche Konfiguration aufweist, was die Seitenansicht angeht, und dazu dient, ein Aufsetzen der Schaltvorrichtung auf eine in Verbindung mit Fig. 3 und 4 noch näher zu erläuternde Tragschiene 6 zu ermöglichen. An einer Stirnseite 7a der Schaltvorrichtung befindet sich ein Betätigungsabschnitt 8, der im Einzelnen in Verbindung mit einer Einrichtung zur Arretierung der Schaltvorrichtung auf der zugehörigen Tragschiene nachfolgend erläutert wird.

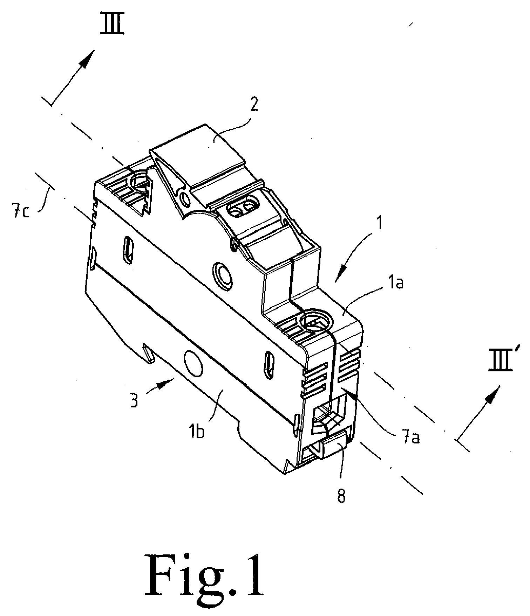

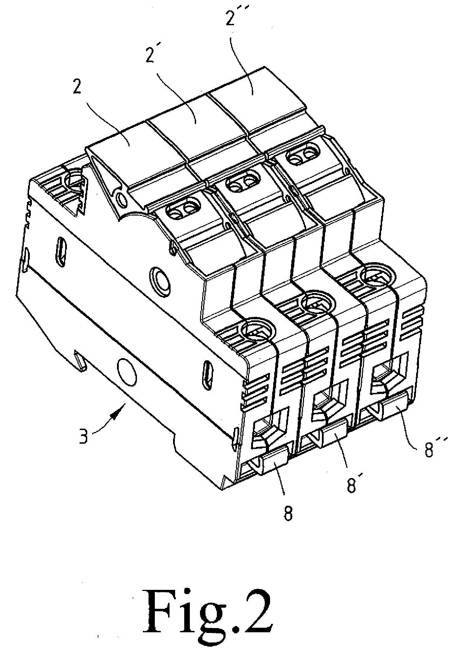

Fig. 2 zeigt eine Fig. 1 entsprechende Darstellung einer dreipoligen Schaltvorrichtung, die aus insgesamt drei Schaltvorrichtungen der in Fig. 1 gezeigten Art zusammengesetzt und zu einem Modul verbunden ist. Bei einer dreipoligen Schaltvorrichtung weist vorzugsweise jede einzelne Schaltvorrichtung jeweils eine Arretiereinrichtung auf, so dass insgesamt eine sichere Befestigung der dreipoligen Schaltvorrichtung gegenüber der zugehörigen Tragschiene sichergestellt werden kann. Die Betätigungsabschnitte sind in Fig. 2 mit 8, 8' und 8" bezeichnet.

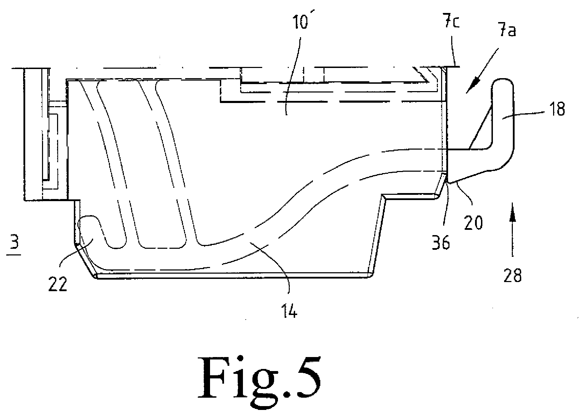

Während beim Stand der Technik die Arretiereinrichtung aus einem Schieber besteht, der an der Unterseite des Gehäuses 1 der Schaltvorrichtung entlang einer Führungseinrichtung verstellbar gelagert ist, weist die erfindungsgemäße Schaltvorrichtung eine Arretiereinrichtung auf, die einen integralen Bestandteil der Schaltvorrichtung bildet. Gemäß der bevorzugten und in Fig. 3 dargestellten Ausführungsform der Erfindung ist die Arretiereinrichtung an dem Gehäuse 1 angeformt, vorzugsweise an der Gehäuseschalenhälfte 1a. Zu diesem Zweck ist die Schalenhälfte 1a mit einem in Längsachsenrichtung 7c des Gehäuses 1 ausgebildeten Steg 10 versehen. Der Steg 10 verläuft parallel zur Längsachse des Gehäuses 1 an der Schalenhälfte 1a, und zwar nahe der Unterkante bzw. dem Boden des Gehäuses 1 über eine vorgegebene Länge. An dem Steg 10 sind nach unten abstrebende Rippen 11, 12 angeformt, an deren vom Steg 10 entfernten Ende eine vorzugsweise geschweifte Zunge 14 angeformt ist, wie deutlich aus Fig. 3 hervorgeht. Bei der dargestellten Ausführungsform sind vorzugsweise zwei parallel zueinander verlaufende Rippen 11, 12 vorgesehen, die etwa senkrecht auf die Zunge 14 auftreffen, wobei die Stärke der Rippen 11, 12 sowie der Zunge 14 derart gewählt ist, dass die Zunge 14 eine vorgegebene federnde bzw. elastische Eigenschaft hat und die Zunge 14 innerhalb einer mit 15 bezeichneten Aussparung an der Unterseite des Gehäuses 1 zwischen den Gehäuseschalenhälften 1a, 1b verstellt werden kann. Die Zunge 14 ist an dem in Fig. 1 unteren Ende der Rippen 11, 12 angeformt bzw. bildet einen integralen Bestandteil mit den Rippen 11, 12 und dem Steg 10, von welchem die Rippen 11, 12 weglaufen. Sowohl der Steg 10 als auch die Rippen 11, 12 und die Zunge 14 sind vorzugsweise an der Gehäuseschalenhälfte 1a angeformt, wie dies noch im Folgenden beschrieben wird. Die Gehäuseschalenhälften 1a, 1b sind, wie die Fig. 3 und 5 zeigen, komplementär oder zumindest weitgehend komplementär zueinander ausgebildet.

Der Steg 10 der Gehäuseschalenhälfte 1a hat einen komplementären Steg 10' in der Gehäuseschalenhälfte 1b, wobei die Höhe diese Stege 10, 10' gleich oder geringfügig kleiner ist als die lichte Weite zwischen den Gehäuseschalenhälften 1a, 1b. Bei der dargestellten Ausführungsform hat der Steg 10 eine größere Höhe und reicht somit zumindest teilweise in die Gehäuseschalenhälfte 1b. Die Summe der Stege 10, 10' ist somit maximal gleich der lichten Weite zwischen den Gehäuseschalenhälften 1a, 1b.

Bei der dargestellten Ausführungsform steht der Steg 10 von der Gehäuseschalenhälfte 1a über eine Breite bzw. Tiefe ab, die etwa der Breite einer Gehäusehälfte ist oder etwas größer als die Breite einer Gehäusehälfte, wobei in letzterem Fall der Steg in die zweite Gehäusehälfte 1b hineinreicht. Gemäß Fig. 3 schließt sich an den Steg 10 ein weiterer Steg 13 an, der in Richtung der in Fig. 3 rechten Stirnseite 7a des Gehäuses verläuft und bei der dargestellten Ausführungsform eine geringere Breite aufweist, als der Steg 10. Sowohl dem Steg 10 als auch dem Steg 13 sind in der gegenüberliegenden Gehäuseschalenhälfte 1b entsprechend komplementäre Stege 10', 13' zugeordnet, so dass eine gegenseitige Abstützung zwischen den jeweiligen Stegen 10, 10' und 13, 13' erfolgt, sobald die Gehäuseschalenhälften 1a, 1b zusammengefügt sind. Die Rippen 11, 12 haben eine kleinere Breite gegenüber dem Steg 10, 10', so dass sie frei gegenüber den Außenseiten der Gehäuseschalenhälften 1a, 1b verlagerbar sind, d. h. dass die Rippen 11, 12 wie auch die Zunge 14, gegenüber den Wänden der Gehäuseschalenhälften 1a, 1b einen Luftspalt einhalten, wodurch die Beweglichkeit der Rippen 11, 12 und der Zunge 14 gegenüber den Gehäuseschalenhälften 1a, 1b gewährleistet ist.

Fig. 3 zeigt schematisch den Zustand, in welchem das Gehäuse auf eine Tragschiene 26 aufgesetzt ist. Das Aufsetzen des Gehäuses 1 auf die Tragschiene wird nachfolgend noch näher Erläutert.

Die Zunge 14 ist gemäß Fig. 3 und 4 an ihrem nach außen stehenden Ende mit einem Betätigungsabschnitt 18 versehen, der hakenförmig ausgebildet und zur Oberseite des Gehäuses gebogen ist. Am Betätigungsabschnitt 18 ist weiterhin ein Rastabschnitt 20 ausgebildet, der unterhalb des nach oben gebogenen Betätigungsabschnitts 18 platziert ist und als Rastmittel gegenüber einem zugehörigen Gehäuseteil fungiert. Das dem Betätigungsabschnitt 18 gegenüberliegende Ende der Zunge 14 ist hakenförmig nach oben gebogen und dient als Arretierabschnitt 22 zur Arretierung der Schaltvorrichtung gegenüber einem Schenkel 24 einer Tragschiene 26. Aus Fig. 3 ergibt sich, dass der Arretierabschnitt 22 vom Niveau her gesehen tiefer liegt als der Betätigungsabschnitt 18. Der Grund hierfür ist, dass die Tragschiene 26 direkt an einer Montagewand oder dergleichen montiert sein kann und damit eine freie Bewegung des Betätigungsabschnitts 18 dadurch gewährleistet sein soll, dass der Betätigungsabschnitt 18 eine vorgegebene Distanz gegenüber der Montageplatte aufweist. Der Arretierabschnitt 22 ist leicht nach oben gebogen und zwar soweit, dass er einen Schenkel 24a der Tragschiene 26 untergreifen kann, wenn das Gehäuse 1 auf die Tragschiene 26 aufgesetzt ist. Der Arretierabschnitt 22 befindet sich sehr nahe an dem Gehäuseboden, also im Bereich der Aufnahme der Tragschiene 26 und damit auf einem Niveau unterhalb des Betätigungsabschnitts 18 und soll nach Aufsetzen der Schaltvorrichtung auf die zugehörige Tragschiene 22 nach entsprechender Betätigung gemäß Fig. 3 sicher einen Schenkel 24 der Tragschiene 26 untergreifen können. Wenn das Gehäuse 1 von der zugehörigen Tragschiene 26 entfernt bzw. gelöst werden soll, ist zum Lösen dieser Arretierung der Betätigungsabschnitt 18 in Fig. 3 nach rechts zu verlagern, um den Arretierabschnitt 22 in Fig. 3 ebenfalls nach rechts zu verlagern, damit eine Freigabe gegenüber der Tragschiene 26 erreicht werden kann. Im nicht auf die Tragschiene 26 aufgesetzten Zustand, d. h. vor der Montage der Schaltvorrichtung, befindet sich die Zunge 14 in einer Position, die in Fig. 5 gezeigt ist, d. h. der Arretierabschnitt 22 befindet sich außerhalb der in Fig. 4 mit 3 bezeichneten Ausnehmung, somit im Inneren der Gehäuseschalenhälften 1a, 1b, wie Fig. 5 zeigt. Der Betätigungsabschnitt 18 liegt mit seinem Rastabschnitt 20 auf einer stirnseitigen Wandung des Gehäuses 1 arretierend auf und hält damit den Arretierabschnitt 22 in der in Fig. 5 gezeigten Position. Durch Anheben des Betätigungsabschnitts 18, vorzugsweise in Richtung des Pfeiles 28 in Fig. 5, wird eine Verlagerung der Zunge 14 in Fig. 5 nach links ermöglicht in Richtung auf die Ausnehmung 3 zum Zwecke der Arretierung gegenüber einer Tragschiene 26. Voraussetzung hierfür ist, dass die Rippen 11, 12 eine gewisse Federelastizität besitzen und die Verlagerung der Zunge 14 aus der in Fig. 5 gezeigten Position in die in Fig. 3 dargestellte Position gestatten. Der Rastabschnitt 20 ist an der Unterseite des Betätigungshebels 18 in Form einer überstehenden Zunge oder Rippe ausgebildet und steht bei arretiertem Betätigungsabschnitt 18 in Eingriff mit einem Wandabschnitt der Stirnseite 7a. Zur Verlagerung der Zunge 14 sind die Rippen 11, 12 derart an dem Steg 10 angeformt, dass sie unter einer gewissen Vorspannung stehen und nach Lösen des Betätigungshebels 18 aus der in Fig. 5 gezeigten Arretierposition den Abschnitt 22 der Zunge 14 aus dem Gehäuseabschnitt und aus der in Fig. 5 gezeigten Position heraus bewegen.

Zur besseren Verdeutlichung der Aussparung 3 ist eine Teilperspektivansicht in Fig. 4 gegeben, welche die Schalenhälfte 1b und die dahinter befindliche Schalenhälfte 1a darstellt und die Ausnehmung 3, die durch einen etwa hakenförmigen Eingriffsabschnitt 30 auf der in Fig. 4 links gezeigten Seite einerseits und einen teilweise geraden und abgewinkelten Führungsabschnitt 32 definiert ist. Die Ausnehmung 3 wird bei der dargestellten Ausführungsform der Schaltvorrichtung durch eine entsprechende Verlängerung der Gehäusewandungen der Gehäuseschalenhälften 1a, 1b festgelegt, wobei der Eingriffsabschnitt 30 und der Führungsabschnitt 32 als an den Gehäuseschalenhälften 1a, 1b vorstehenden Formteilen gebildet sein können und somit gegenüber einem mit 34 bezeichneten Gehäuseboden (Fig. 4) überstehen.

Bei einer bevorzugten Ausführungsform ist der Rastabschnitt 20 als an der Unterseite der Zunge 14 ausgebildete Rastnase vorgesehen, wobei die Zunge 14 eine derartige Vorspannung besitzt, dass in der in Fig. 5 gezeigten Position die Rastnase 20 selbsttätig eine stirnseitig des Gehäuses ausgebildete, Gehäusewand bzw. Gehäusekante 36 übergreift. Die dazu erforderliche Vorspannung wird durch die Länge der Rippen 11, 12 erzeugt. Zur Erhöhung dieser Vorspannung kann die Länge der Rippe 12 größer sein als die Länge der Rippe 11.

Bei der dargestellten Ausführungsform sind entsprechend Fig. 3 und 5 zwei zueinander parallel verlaufende Rippen 11, 12 vorgesehen; im Bedarfsfall kann die Zahl dieser Rippen verändert, insbesondere erhöht werden. Die Zunge 14 selbst hat etwa S-förmige Gestalt und weist an ihren beiden Enden den bereits beschriebenen Betätigungsabschnitt 18 und den Arretierabschnitt 22 auf, die beide von unten nach oben (siehe Fig. 3 und 4) in Richtung Gehäuseoberseite hochgezogen sind. Wesentlich bei der dargestellten, bevorzugten Ausführungsform ist, dass sowohl die Rippen 11, 12, weiterhin die Zunge 14 und die quer zur Längsachse des Gehäuses verlaufende Gehäusekante 36 an der Gehäuseschalenhälfte 1a ausgebildet sind und die vorerwähnten Komponenten integrierte Teile der Gehäuseschalenhälfte 1a darstellen, was die Herstellung der erfindungsgemäßen Schaltvorrichtung wesentlich vereinfacht.

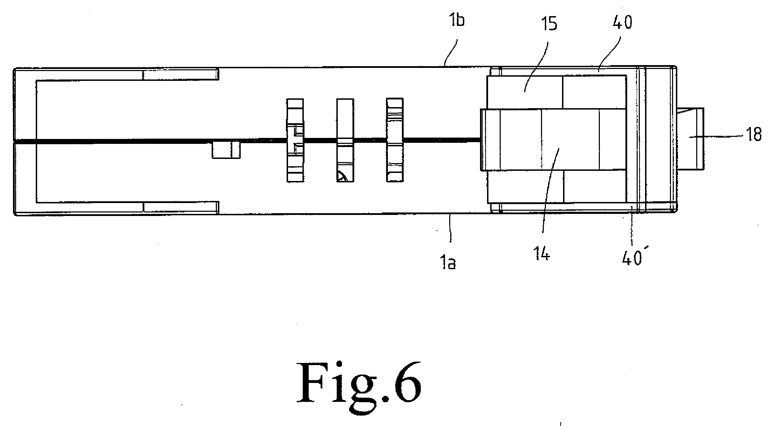

Fig. 6 zeigt eine Ansicht der Schaltvorrichtung von unten und veranschaulicht, dass die Aussparung 15 von einem etwa U-förmigen Steg 40 begrenzt ist, wobei der Steg 40 zur Stirnseite des Gehäuses hin die Aussparung 15 abschließt. Aus Fig. 6 ist weiter erkennbar, dass die Zunge 14 innerhalb der durch den Steg 40 definierten Öffnung liegt und damit grundsätzlich von unten frei zugänglich ist. Diese durch den U-förmigen Steg 40 gebildete Öffnung kann allerdings auch durch eine Wandung verschlossen sein, falls dies gewünscht ist. Der Steg 40 ist hierbei abschnittsweise an der Schalenhälfte 1a und an der Schalenhälfte 1b ausgebild und ist bei dieser Ausbildungsform durch eine Trennstelle 40' an der Schalenhälfte 1a definiert.

Die Tragschiene 26 hat bei der dargestellten Ausführungsform entsprechend Fig. 3 und 4 weitgehend U-förmigen Verlauf, kann im Einzelnen aber so ausgebildet sein, wie dies in DE 20 2004 011 736 U beschrieben ist. Derartige Tragschienen 26 werden auch als Hutschienen bezeichnet und sind beispielsweise mit einer Breite von 35 mm verfügbar. Die in Fig. 3 dargestellte, bevorzugte Hutschiene besteht somit aus einer Basis 26a und seitlich hiervon nach oben (Fig. 3) abstrebenden, weitgehend zueinander parallelen Schenkel 26b, 26c, an deren oberen Enden seitlich und nach außen abgebogene Flansche 24a, 24b vorgesehen sind, welche im auf der Tragschiene 26 montierten Zustand des Gehäuses 1 von der Schaltvorrichtung umgriffen werden.

Die erfindungsgemäße Schaltvorrichtung mit Arretiereinrichtung wird vorzugsweise aus Kunststoff, vorzugsweise Polyamid, hergestellt und ermöglicht eine leichte Montage und eine leichte Demontage gegenüber den zugehörigen Tragschienen. Eine bevorzugte Ausführungsform der Schaltvorrichtung ist ein Sicherungshalter, bei dem im Gehäuse jeweils eine Sicherung aufgenommen ist, zu deren Aktivierung bzw. Inbetriebnahme der Schalter 2 dient.

Nach dem Spritzen und Entformen der beiden Gehäuseschalenhälften 1a, 1b werden die beiden Gehäuseschalen durch Ultraschallverschweißung fest miteinander verbunden. Die Gestaltung der Gehäuseschalenhälften 1a, 1b zusammen mit der an der einen der beiden Gehäuseschalenhälften 1a angeformten Zunge 14 ermöglicht eine leichte Entformung der Teile vor deren Zusammenfügung und Ultraschallverschweißung.

Aus vorstehender Beschreibung ist erkennbar, dass die Zunge 14 an ihrem einen gegenüber den Rippen 11, 12 vorstehenden Ende mit dem Arretierabschnitt 22 und auf dem gegenüberliegenden Ende mit dem Betätigungsabschnitt 18 und dem Rastabschnitt 20 versehen ist, wobei der Rastabschnitt 20 und der Betätigungsabschnitt 18 auf einem über dem Niveau des Arretierabschnitts 22 liegenden höheren Niveau vorgesehen sind. Die Rippen 11, 12 und/oder die Zunge 14 haben eine solche Stärke, dass eine vorgegebene Federelastizität gewährleistet ist. Die Stärke der Rippen 11, 12 und/oder der Zunge 14 beträgt vorzugsweise weniger als 4 mm, vorzugsweise weniger als 3 oder 2 mm. Die Länge der Aussparung 15 ist, wie aus Fig. 3 ersichtlich ist, etwas kürzer als die Länge der Zunge 14 zwischen dem Arretierabschnitt 22 und dem Betätigungsabschnitt 18, wodurch gewährleistet ist, dass der Betätigungsabschnitt 18 sicher aus dem Gehäuse herausragt, wenn sich der Arretierabschnitt 22 in der in Fig. 5 gezeigten Position befindet. Das Aufsetzen der Schaltvorrichtung erfolgt gemäß Fig. 4 zunächst so, dass die Schaltvorrichtung, im Gegenuhrzeigersinn gekippt, mit den spitzen Eingriffsabschnitten 30 zunächst auf den Flansch 24b der Tragschiene 26 aufgesetzt wird, anschließend im Uhrzeigersinn verschwenkt und auf den anderen Flansch 24a der Tragschiene 26 mittels der Führungsabschnitte 32 aufgesetzt wird, wonach dann der Betätigungsabschnitt 18 aus der in Fig. 5 gezeigten Position gelöst, z. B. durch Anheben dearretiert wird, so dass anschließend der Arretierabschnitt 22 den in Fig. 4 rechten Schenkel der Tragschiene 26 untergreift.

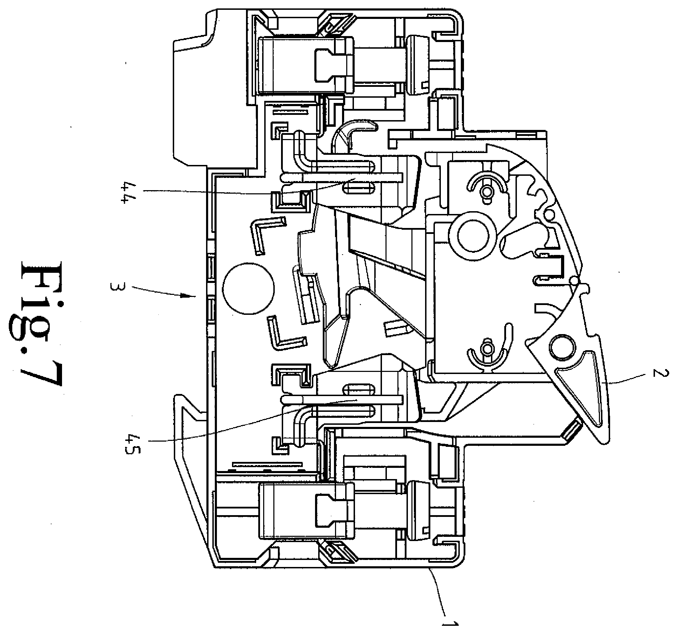

Fig. 7 zeigt eine bevorzugte Ausführungsform einer erfindungsgemäßen Schaltvorrichtung als Sicherungsschalter. Die Schaltvorrichtung weist einen mit Bezugszeichen 2 bezeichneten Betätigungsschalter auf und enthält weiterhin Kontakte 44, 45. Im Inneren der Schaltvorrichtung befinden sich nicht weiter beschriebene Komponenten, die zum Einführen einer Sicherung zwischen die Kontakte 44, 45 dienen. Alternativ kann die Sicherung von Hand zwischen die Kontakte 44, 45 verlagert werden. Zur Inbetriebnahme des Sicherungshalters ist schließlich der Betätigungsschalter 2 in die in Fig. 7 bezeichnete Position zu verlagern, in welcher die Sicherung zwischen den Kontaktabschnitten 44, 45 in Betrieb gesetzt bzw. unter Strom gesetzt wird. An der Unterseite des Sicherungsschalters befindet sich die vorstehend beschriebene Ausnehmung 3 zur Befestigung des Sicherungsschalters auf einer Tragschiene 26. Wie erwähnt, kann die erfindungsgemäße Ausbildung der Arretier-Zunge 14 auch bei anderen Schalteinrichtungen Einsatz finden.

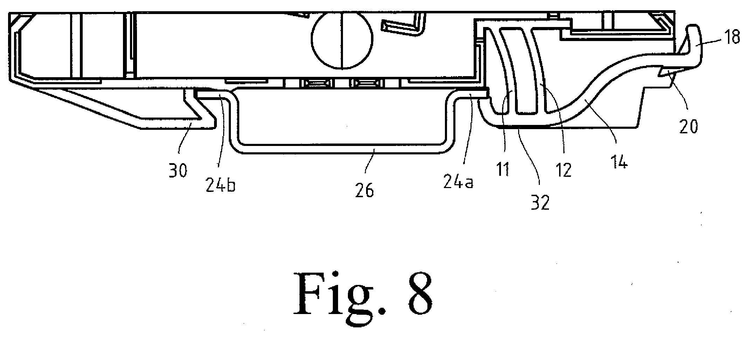

Fig. 8 zeigt die Schaltvorrichtung in dem auf die Tragschiene 26 aufgesetzten Zustand, in welchem die Zunge 14 den Flansch 24a untergreift, während der Flansch 24b der Tragschiene 26 in den Eingriffsabschnitt 30 hineinreicht. Damit sitzt die Schaltvorrichtung fest auf der Tragschiene 26 und lässt sich dadurch von dieser lösen, indem der Betätigungsabschnitt 18 in Fig. 8 mittels eines Werkzeugs nach außen, d. h. nach rechts gegenüber dem Gehäuse 1 verlagert wird, wodurch der Flansch 24a freigegeben wird.

Einzelheiten einer beispielsweise verwendbaren Schaltvorrichtung sind zum Beispiel in der DE 10 2006 004 621, Fig. 2 beschrieben.

## Patentansprüche

1. Schaltvorrichtung zur Befestigung auf Tragschienen (26) in Schaltanlagen oder dergleichen, mit einem Gehäuse (1), in welchem eine Schalteinrichtung und eine an der Unterseite des Gehäuses ausgebildete Einrichtung (14, 18, 22) zum Aufsetzen und Arretieren auf einer Tragschiene (26) vorhanden sind,
wobei die Einrichtung (14, 18, 22) eine an das Profil der Tragschiene (26) angepasste Ausnehmung (3) aufweist und mit einem gegenüber der Ausnehmung (3) verlagerbaren Element (14) versehen ist, das in einer Aussparung (15) des Gehäuses (1) angeordnet ist,
**dadurch gekennzeichnet, dass** das verlagerbare Element (14) eine Zunge (14) ist, die durch wenigstens zwei Rippen (11, 12) an der Unterseite des Gehäuses (1) angeformt ist,
wobei die Rippen (11, 12) parallel zueinander verlaufen und mit einem Ende am Gehäuse (1) angeformt sind, während an dem anderen Ende der Rippen (11 ,12) die Zunge (14) angeformt ist,
dass die Zunge (14) an einem über die Rippen (11, 12) vorstehenden, in Richtung auf die Ausnehmung (3) weisenden Ende einen hakenförmigen Arretierabschnitt (22) und am anderen Ende einen Rastabschnitt (20) und einen Betätigungsabschnitt (18) aufweist, wobei der Rastabschnitt (20) der Zunge (14) unterhalb, d.h. auf der der Unterseite des Gehäuses (1) zugewandten Seite, des zur Oberseite des Gehäuses gebogenen
Betätigungsabschnitts (18) platziert ist und mit einer stirnseitigen Kante (36) des Gehäuses (1) in Eingriff bringbar ist, um den Arretierabschnitt (22) in einer Freigabeposition zu halten.

2. Schaltvorrichtung nach Anspruch 1,
**dadurch gekennzeichnet, dass** die Rippen (11, 12) und/oder die Zunge (14) federnde Eigenschaft aufweisen.

3. Schaltvorrichtung nach Anspruch 1 oder 2,
**dadurch gekennzeichnet, dass** die Rippen (11, 12) und/oder die Zunge (14) eine Stärke von weniger als 4 mm, vorzugsweise weniger als 3 mm oder 2 mm, aufweisen.

4. Schaltvorrichtung nach wenigstens einem der vorangehenden Ansprüche,
**dadurch gekennzeichnet, dass** die Zunge (14) gebogen, vorzugsweise S-förmig gebogen, ist und der Arretierabschnitt (22) nahe dem Boden des Gehäuses (1) angeordnet ist, während der Betätigungsabschnitt (18) der Zunge (14) auf einem Niveau oberhalb des Arretierabschnitts (22) angeordnet ist und zumindest bei nicht gegenüber der Tragschiene (26) arretiertem Schaltgerät aus dem Gehäuse (1) herausragt.

5. Schaltvorrichtung nach einem der Ansprüche 1 bis 4, wobei das Gehäuse (1) aus zwei Gehäuseschalenhälften (1a, 1b) besteht,
**dadurch gekennzeichnet, dass** die Rippen (11, 12) und die Zunge (14) an einer ersten der Gehäuseschalenhälften (1a, 1b) angeformt sind.

6. Schaltvorrichtung nach Anspruch 5,
**dadurch gekennzeichnet, dass** die erste Gehäuseschalenhälfte (1a) einen Steg (10) aufweist, an welchem die Rippen (11 ,12) angeformt sind.

7. Schaltvorrichtung nach einem der Ansprüche 5 bis 6,
**dadurch gekennzeichnet, dass** die zur ersten Gehäuseschalenhälfte, komplementäre zweite Gehäuseschalenhälfte (1b) eine zum Steg (10) der ersten Gehäuseschalenhälfte (1a) fluchtenden bzw. ausgerichteten Steg (10') aufweist, wobei die beiden Stege (10, 10') die Oberseite der Aussparung (15) festlegen, und die Stege (10, 10') bei zusammengesetzten Gehäusehälften in Anlage zueinander stehen.

8. Schaltvorrichtung nach wenigstens einem der vorangehenden Ansprüche,
**dadurch gekennzeichnet, dass** die Aussparung (15) eine Öffnung festlegt, die durch einen U-förmigen Steg (40) der Wandungen des Gehäuses (1) umschlossen ist.

9. Schaltvorrichtung nach Anspruch 8,
**dadurch gekennzeichnet, dass** die Zunge (14) mittig in der Aussparung (15) gelagert ist.

10. Schaltvorrichtung nach wenigstens einem der vorangehenden Ansprüche,
**dadurch gekennzeichnet, dass** der Rastabschnitt (20) der Zunge (14) durch eine Rastnase (20) gebildet ist.

11. Schaltvorrichtung nach einem der Ansprüche 1 bis 10,**dadurch gekennzeichnet, dass** die Gehäuseschalenhälften (1a, 1b) Wände aufweisen, die im Bereich des Gehäusebodens eine Ausnehmung (3) entsprechend dem Profil einer Tragschiene (26) festlegen.

12. Schaltvorrichtung nach einem der Ansprüche 1 bis 10, **dadurch gekennzeichnet, dass** die Zunge (14) einen etwa S-förmigen Verlauf aufweist mit an beiden Enden befindlichen harkenförmigen Abschnitten (18, 22), die in Richtung zur Oberseite des Gehäuses (1) abgebogen sind.

13. Schaltvorrichtung nach einem der Ansprüche 1 bis 10, **dadurch gekennzeichnet, dass** die Zunge (14) eine Länge aufweist, die etwa der axialen Länge der Aussparung (15) entspricht.

14. Schalteinrichtung nach wenigstens einem der vorangehenden Ansprüche **dadurch gekennzeichnet, dass** sie als Sicherungsschalter ausgebildet ist.

## Claims

1. Switching device for fastening to carrier rails (26) in switching systems or the like, having a housing (1) in which there are provided a switching device and a device (14, 18, 22), which is formed on the underside of the housing, for attaching and locking onto a carrier rail (26),
wherein the device (14, 18, 22) comprises a cut-out (3) adapted to the profile of the carrier rail (26) and is provided with an element (14) which can be displaced with respect to the cut-out (3) and is disposed in an aperture (15) of the housing (1),
**characterised in that** the displaceable element (14) is a tongue (14) which is integrally formed on the underside of the housing (1) by means of at least two ribs (11, 12), wherein the ribs (11, 12) extend in parallel with one another and are integrally formed at one end on the housing (1), whereas the tongue (14) is integrally formed at the other end of the ribs (11, 12),
**in that** the tongue (14) comprises a hook-shaped locking portion (22) at one end protruding over the ribs (11, 12) and pointing in the direction of the cut-out (3), and comprises a latching portion (20) and an actuating portion (18) at the other end, wherein the latching portion (20) of the tongue (14) is placed below, i.e. on the side, facing towards the underside of the housing (1), of the actuating portion (18) bent towards the upper side of the housing, and can be brought into engagement with an end-side edge (36) of the housing (1) in order to hold the locking portion (22) in a released position.

2. Switching device as claimed in claim 1,
**characterised in that** the ribs (11, 12) and/or the tongue (14) have a resilient property.

3. Switching device as claimed in claim 1 or 2,
**characterised in that** the ribs (11, 12) and/or the tongue (14) have a thickness of less than 4 mm, preferably less than 3 mm or 2 mm.

4. Switching device as claimed in at least one of the preceding claims
**characterised in that** the tongue (14) is bent, preferably bent in an S-shape, and the locking portion (22) is disposed in proximity to the base of the housing (1), whereas the actuating portion (18) of the tongue (14) is disposed at a level above the locking portion (22) and protrudes from the housing (1) at least when the switching device is not locked with respect to the carrier rail (26).

5. Switching device as claimed in any one of claims 1 to 4, wherein the housing (1) consists of two housing shell halves (1a, 1b),
**characterised in that** the ribs (11, 12) and the tongue (14) are integrally formed on a first one of the housing shell halves (1a, 1b).

6. Switching device as claimed in claim 5,
**characterised in that** the first housing shell half (1a) comprises a web 10), on which the ribs (11, 12) are integrally formed.

7. Switching device as claimed in any one of claims 5 to 6,
**characterised in that** the second housing shell half (1b) which is complementary to the first housing shell half comprises a web (10') which is flush or oriented with the web (10) of the first housing shell half (1a), wherein the two webs (10, 10') constitute the upper side of the aperture (15), and the webs (10, 10') are positioned in abutment with one another when the housing halves are assembled.

8. Switching device as claimed in at least one of the preceding claims,
**characterised in that** the aperture (15) constitutes an opening which is surrounded by a U-shaped web (10) of the walls of the housing (1).

9. Switching device as claimed in claim 8,
**characterised in that** the tongue (14) is mounted centrally in the aperture (15).

10. Switching device as claimed in at least one of the preceding claims,
**characterised in that** the latching portion (20) of the tongue (14) is formed by means of a latching lug (20).

11. Switching device as claimed in any one of claims 1 to 10, **characterised in that** the housing shell halves (1a, 1b) comprise walls which in the region of the housing base constitute a cut-out (3) corresponding to the profile of a carrier rail (26).

12. Switching device as claimed in any one of claims 1 to 10, **characterised in that** the tongue (14) comprises an approximately S-shaped progression having hook-shaped portions (18, 22) which are located at both ends and which are bent in the direction towards the upper side of the housing (1).

13. Switching device as claimed in any one of claims 1 to 10, **characterised in that** the tongue (14) has a length which corresponds approximately to the axial length of the aperture (15).

14. Switching device as claimed in at least one of the preceding claims, **characterised in that** it is formed as a fuse switch.

## Revendications

1. Dispositif de commutation destiné à la fixation sur des rails porteurs (26) dans des installations de commutation ou similaire, comportant un boîtier (1) dans lequel un moyen de commutation et un moyen (14, 18, 22) réalisé sur le côté inférieur du boîtier sont présents pour la pose et le blocage sur un rail porteur (26),
dans lequel le moyen (14, 18, 22) présente un évidement (3) adapté au profil du rail porteur (26) et est muni d'un élément (14) déplaçable par rapport à l'évidement (3), lequel élément est disposé dans une ouverture (15) du boîtier (1),
**caractérisé en ce que** l'élément déplaçable (14) est une languette (14) qui est formée sur le côté inférieur du boîtier (1) par au moins deux nervures (11, 12),
dans lequel les nervures (11, 12) s'étendent parallèlement l'une à l'autre et sont formées sur le boîtier (1) avec une extrémité, alors que sur l'autre extrémité des nervures (11, 12) est formée la languette (14),
**en ce que** la languette (14), sur une extrémité faisant saillie au-dessus des nervures (11, 12), tournée en direction de l'évidement (3), présente une section de blocage (22) en forme de crochet et sur l'autre extrémité, une section d'encliquetage (20) et une section d'actionnement (18), la section d'encliquetage (20) de la languette (14) étant placée en dessous, c'est-à-dire sur le côté tourné vers le côté inférieur du boîtier (1), de la section d'actionnement (18) courbée vers le côté supérieur du boîtier et pouvant être mise en prise avec une arête (36) côté frontal du boîtier (1), afin de maintenir la section de blocage (22) dans une position de libération.

2. Dispositif de commutation selon la revendication 1,
**caractérisé en ce que** les nervures (11, 12) et/ou la languette (14) présentent une caractéristique élastique.

3. Dispositif de commutation selon la revendication 1 ou 2,
**caractérisé en ce que** les nervures (11, 12) et/ou la languette (14) présentent une épaisseur de moins de 4 mm, de préférence de moins de 3 mm ou 2 mm.

4. Dispositif de commutation selon au moins l'une quelconque des revendications précédentes,
**caractérisé en ce que** la languette (14) est courbée, de préférence courbée en forme de S, et **en ce que** la section de blocage (22) est disposée près du fond du boîtier (1), alors que la section d'actionnement (18) de la languette (14) est disposée sur un niveau situé au-dessus de la section de blocage (22) et qu'elle dépasse hors du boîtier (1), tout du moins lorsque l'appareil de commutation n'est pas bloqué par rapport au rail porteur (16).

5. Dispositif de commutation selon l'une quelconque des revendications 1 à 4, dans lequel le boîtier (1) est constitué de deux demi-coques de boîtier (1a, 1b), **caractérisé en ce que** les nervures (11, 12) et la languette (14) sont formées sur une première des demi-coques de boîtier (1a, 1b).

6. Dispositif de commutation selon la revendication 5,
**caractérisé en ce que** la première demi-coque de boîtier (1a) présente une traverse (10) sur laquelle sont formées les nervures (11 ,12).

7. Dispositif de commutation selon l'une quelconque des revendications 5 à 6,
**caractérisé en ce que** la deuxième demi-coque de boîtier (1b), complémentaire à la première demi-coque de boîtier, présente une traverse (10') alignée avec la traverse (10) de la première demi-coque de boîtier (1a) respectivement tournée vers la première demi-coque de boîtier (1a), les deux traverses (10, 10') définissant le côté supérieur de l'ouverture (15) et les traverses (10, 10') étant adjacentes l'une à l'autre lorsque les demi-coques sont assemblées.

8. Dispositif de commutation selon au moins l'une quelconque des revendications précédentes,
**caractérisé en ce que** l'ouverture (15) définit un orifice qui est entouré par une traverse (40), en forme de U, des parois du boîtier (1).

9. Dispositif de commutation selon la revendication 8,
**caractérisé en ce que** la languette (14) est logée au milieu de l'ouverture (15).

10. Dispositif de commutation selon au moins l'une quelconque des revendications précédentes,
**caractérisé en ce que** la section d'encliquetage (20) de la languette (14) est formée par un ergot d'encliquetage (20).

11. Dispositif de commutation selon l'une quelconque des revendications 1 à 10, **caractérisé en ce que** les demi-coques de boîtier (1a, 1b) présentent des parois qui, au niveau du fond du boîtier, définissent un évidement (3) correspondant au profil d'un rail porteur (26).

12. Dispositif de commutation selon l'une quelconque des revendications 1 à 10, **caractérisé en ce que** la languette (14) présente une allure à peu près en forme de S, avec des sections (18, 22) en forme de crochet se situant sur les deux extrémités, lesquelles sections sont courbées en direction du côté supérieur du boîtier (1).

13. Dispositif de commutation selon l'une quelconque des revendications 1 à 10, **caractérisé en ce que** la languette (14) présente une longueur qui correspond à peu près à la longueur axiale de l'ouverture (15).

14. Dispositif de commutation selon au moins l'une quelconque des revendications précédentes **caractérisé en ce qu'**il est réalisé comme commutateur de coupe-circuit.
